# EUROPEAN PATENT APPLICATION

(11) **EP 4 852 600 A1**
(43) Date of publication of application: **09.12.2026**
(21) Application number: 25772757.8
(22) Date of filing: 12.02.2025
(51) Int. Cl.: H04W 76/10

(54) **CALL ESTABLISHMENT METHOD AND ELECTRONIC DEVICE**

(30) Priority: 22.03.2024 CN 202410342986
(71) Applicant: Honor Device Co., Ltd., Shenzhen, Guangdong 518040 (CN)
(72) Inventor: LI, Haibo, Shenzhen, Guangdong 518040 (CN)
(74) Representative: Goddar, Heinz J.
(86) International application number: PCT/CN2025/076901
(87) International publication number: WO 2025/195047

(57) **Abstract**

Embodiments of this application are applicable to the field of communication technologies, and provide a call establishment method and an electronic device. The method is applied in a process of establishing a voice service between a terminal device and a first network device, and includes: when a signal strength of a first detection signal between the terminal device and the first network device is less than a first threshold, suppressing reporting of a measurement report of a preset measurement reporting event to the first network device if the signal strength of the first detection signal is greater than a second threshold; or reporting a measurement report of a preset measurement reporting event to the first network device if the signal strength of the first detection signal is less than or equal to a second threshold. The second threshold is less than the first threshold, the first threshold is a threshold for triggering the terminal device to report the preset measurement reporting event to the first network device, and the preset measurement reporting event is used for the first network device to instruct the terminal device to hand over from the first network device to a second network device, thereby ensuring continuity of the voice service.

## Description

This application claims priority to Chinese Patent Application No. 202410342986.4, filed with the China National Intellectual Property Administration on March 22, 2024 and entitled "CALL ESTABLISHMENT METHOD AND ELECTRONIC DEVICE", which is incorporated herein by reference in its entirety.

### TECHNICAL FIELD

This application relates to the field of communication technologies, and more specifically, to a call establishment method and an electronic device.

### BACKGROUND

During the initial rollout of a next-generation network technology, generally, network signals corresponding to the next-generation network technology are often subject to instability. Therefore, operators generally adopt a fallback policy to ensure normal call operation. The fallback policy may refer to falling back, after a call over a next-generation network device encounters issues, to a previous-generation network device for the call, thereby ensuring the normal call operation.

For example, in a process in which a terminal device establishes a voice service through a 5G network device, the 5G network device configures an A2 measurement reporting event for the terminal device. Based on the A2 measurement reporting event configured by the 5G network device, the terminal device measures a signal strength of a currently camped-on NR serving cell, and reports the A2 measurement reporting event to the 5G network device when the signal strength of the currently camped-on NR serving cell is less than a preset threshold. Based on the reported A2 measurement reporting event, the 5G network device initiates evolved packet system fallback (evolved packet system fallback, EPS FB), thereby instructing the terminal device to fall back from VoNR to VoLTE to ensure continuity of the voice service.

### SUMMARY

Embodiments of this application provide a call establishment method, to improve continuity of a voice service.

According to a first aspect, a call establishment method is provided. The method is applied in a process of establishing a voice service between a terminal device and a first network device, and the method includes:
when a signal strength of a first detection signal between the terminal device and the first network device is less than a first threshold,
suppressing reporting of a measurement report of a preset measurement reporting event to the first network device if the signal strength of the first detection signal is greater than a second threshold; or
reporting a measurement report of a preset measurement reporting event to the first network device if the signal strength of the first detection signal is less than or equal to a second threshold, where
the second threshold is less than the first threshold, the first threshold is a threshold for triggering the terminal device to report the measurement report of the preset measurement reporting event to the first network device, and the preset measurement reporting event is used for the first network device to instruct the terminal device to hand over from the first network device to a second network device.

The suppressing reporting of a measurement report of a preset measurement reporting event to the first network device may be understood as skipping reporting the measurement report of the preset measurement reporting event to the first network device, and may specifically be skipping generating the measurement report of the preset measurement reporting event, thereby skipping reporting the measurement report of the preset measurement reporting event; or skipping reporting the measurement report after the measurement report of the preset measurement reporting event is generated.

As described in the background, in the process in which the terminal device establishes a voice service through a 5G network device, the terminal device reports an A2 measurement reporting event to the 5G network device when a signal strength of a currently camped-on NR serving cell is less than a preset threshold. The 5G network device initiates EPS FB based on the reported A2 measurement reporting event, instructing the terminal to fall back from VoNR to VoLTE (that is, hand over from an NR network to an LTE network for the voice service). However, compared with establishing the voice service through VoNR, establishing the voice service through an EPS FB procedure involves more network elements and more complex interactions between the network elements. Furthermore, given that a current NR network has been relatively well-deployed, it is concluded through analysis and research that in the foregoing scenario (for example, a reference signal received power of a current NR serving cell is less than a preset threshold 1), in some cases (for example, the reference signal received power of the current NR serving cell is greater than a newly set threshold 2, and the threshold 2 is less than the threshold 1), establishing the voice service through the EPS FB procedure is more likely to experience a failure compared with continuing to establish the voice service through VoNR.

The call establishment method provided in the embodiments of this application is applied in a process of establishing a voice service between a terminal device and a first network device, and the method includes: when a signal strength of a first detection signal between the terminal device and the first network device is less than a first threshold, suppressing reporting of a measurement report of a preset measurement reporting event to the first network device if the signal strength of the first detection signal is greater than a second threshold; or
reporting a measurement report of a preset measurement reporting event to the first network device if the signal strength of the first detection signal is less than or equal to a second threshold, where the second threshold is less than the first threshold, the first threshold is a threshold for triggering the terminal device to report the measurement report of the preset measurement reporting event to the first network device, and the preset measurement reporting event is used for the first network device to instruct the terminal device to hand over from the first network device to a second network device. It may be understood that, during the initial rollout of a new network standard, operators generally adopt a relatively conservative fallback policy by setting a higher fallback threshold. In this case, when the signal strength of the first detection signal between the terminal device and the first network device is high and can meet a voice call requirement of a user, the terminal device may perform EPS FB, resulting in an increased risk of voice service establishment failure caused by EPS FB. According to the call establishment method provided in the embodiments of this application, when the signal strength of the first detection signal between the terminal device and the first network device is less than the first threshold, whether the signal strength of the first detection signal is greater than the second threshold (less than the first threshold) is further determined, and the reporting of the measurement report of the preset measurement reporting event to the first network device is suppressed when the signal strength of the first detection signal is greater than the second threshold. This can avoid a situation in which the terminal device performs EPS FB when the signal strength of the first detection signal between the terminal device and the first network device is high and can meet the voice call requirement of the user, thereby improving continuity of the voice service. In addition, only when the signal strength of the first detection signal is less than or equal to the second threshold, the measurement report of the preset measurement reporting event is reported to the first network device, so that the terminal device can perform EPS FB, thereby ensuring the continuity of the voice service.

With reference to the first aspect, in some embodiments of the first aspect, the suppressing reporting of a measurement report of a preset measurement reporting event to the first network device if the signal strength of the first detection signal is greater than a second threshold includes: determining, if the signal strength of the first detection signal is greater than the second threshold, whether the terminal device supports establishing the voice service through the first network device; and suppressing the reporting of the measurement report of the preset measurement reporting event to the first network device if the terminal device supports establishing the voice service through the first network device.

According to the call establishment method provided in the embodiments of this application, in the process of further determining whether the signal strength of the first detection signal is greater than the second threshold (less than the first threshold), whether the terminal device supports establishing the voice service through the first network device is further determined. Only when the terminal device supports establishing the voice service through the first network device, the reporting of the measurement report of the preset measurement reporting event to the first network device is suppressed. This avoids a situation in which after the terminal device suppresses the reporting of the measurement report of the preset measurement reporting event to the first network device, the voice service cannot be established through the first network device, thereby avoiding voice service establishment failure.

With reference to the first aspect, in some embodiments of the first aspect, the suppressing the reporting of the measurement report of the preset measurement reporting event to the first network device if the terminal device supports establishing the voice service through the first network device includes: suppressing the reporting of the measurement report of the preset measurement reporting event to the first network device when the terminal device supports establishing the voice service through the first network device, the current terminal device has received an invite message, and the terminal device has not sent a 180 ringing message.

A period after the terminal device receives the invite message and before the terminal device sends the 180 ringing message is usually a period of a process in which the terminal device establishes the voice service. When the terminal device sends the 180 ringing message, the voice service has been successfully established. Therefore, it is unnecessary to suppress the reporting of the measurement reporting event to the first network device.

With reference to the first aspect, in some embodiments of the first aspect, the signal strength of the first detection signal includes a reference signal received power RSRP.

With reference to the first aspect, in some embodiments of the first aspect, the suppressing reporting of a measurement report of a preset measurement reporting event to the first network device if the signal strength of the first detection signal is greater than a second threshold includes: suppressing the reporting of the measurement report of the preset measurement reporting event to the first network device, and establishing the voice service through the first network device, if the signal strength of the first detection signal is greater than the second threshold.

According to the call establishment method provided in the embodiments of this application, after the signal strength of the first detection signal is greater than the second threshold, and the reporting of the measurement report of the preset measurement reporting event to the first network device is suppressed, the first network device does not instruct the terminal device to perform EPS FB, and the terminal device does not fall back to establishing the voice service through the second network device. In this case, because the signal strength of the first detection signal is greater than the second threshold, communication quality between the terminal device and the first network device can meet a voice call requirement of the user, so that the terminal device can establish the voice service through the first network device, thereby ensuring continuity of the voice service.

With reference to the first aspect, in some embodiments of the first aspect, the first network device is a new radio NR device, and the second network device is a long term evolution LTE device.

With reference to the first aspect, in some embodiments of the first aspect, the preset measurement reporting event is an A2 measurement reporting event.

With reference to the first aspect, in some embodiments of the first aspect, the reporting a measurement report of a preset measurement reporting event to the first network device if the signal strength of the first detection signal is less than or equal to a second threshold includes: reporting the measurement report of the preset measurement reporting event to the first network device if the signal strength of the first detection signal is less than or equal to the second threshold, to cause the first network device to initiate an evolved packet system fallback EPS FB procedure based on the preset measurement reporting event.

According to the call establishment method provided in the embodiments of this application, when the signal strength of the first detection signal is less than or equal to the second threshold, signal quality between the terminal device and the first network device is too low to meet a requirement of the terminal device for establishing the voice service. In this case, the terminal device and the first network device report the measurement report of the preset measurement reporting event, to cause the first network device to initiate EPS FB based on the preset measurement reporting event, so that the terminal device can fall back to establishing the voice service through the second network device, thereby further ensuring continuity of the voice service through the second network device when the signal strength of the first detection signal is less than or equal to the second threshold.

According to a second aspect, a call establishment apparatus is provided, including units configured to perform any method in the first aspect. The apparatus may be a server, a terminal device, or a chip in a terminal device. The apparatus may include an input unit and a processing unit.

When the apparatus is a terminal device, the processing unit may be a processor, and the input unit may be a communication interface; and the terminal device may further include a memory, where the memory is configured to store computer program code, and when the processor executes the computer program code stored in the memory, the terminal device is caused to perform any method in the first aspect.

When the apparatus is a chip in a terminal device, the processing unit may be a processing unit in the chip, and the input unit may be an output interface, a pin, a circuit, or the like; the chip may further include a memory, and the memory may be a memory (for example, a register or a cache) in the chip, or may be a memory (for example, a read-only memory or a random access memory) outside the chip; and the memory is configured to store computer program code, and when a processor executes the computer program code stored in the memory, the chip is caused to perform any method in the first aspect.

In a possible implementation, the memory is configured to store computer program code; and a processor, where the processor executes the computer program code stored in the memory, and the computer program code stored in the memory is executed, the processor is configured to perform:

According to a third aspect, a computer-readable storage medium is provided. The computer-readable storage medium stores computer program code, the computer program code, when executed by a call establishment apparatus, causing the call establishment apparatus to perform any call establishment method in the first aspect.

According to a fourth aspect, a computer program product is provided. The computer program product includes computer program code, the computer program code, when executed by a call establishment apparatus, causing the call establishment apparatus to perform any apparatus method in the first aspect.

The call establishment method provided in the embodiments of this application is applied in a process of establishing a voice service between a terminal device and a first network device, and the method includes: when a signal strength of a first detection signal between the terminal device and the first network device is less than a first threshold, suppressing reporting of a measurement report of a preset measurement reporting event to the first network device if the signal strength of the first detection signal is greater than a second threshold; or
reporting a measurement report of a preset measurement reporting event to the first network device if the signal strength of the first detection signal is less than or equal to a second threshold, where the second threshold is less than the first threshold, the first threshold is a threshold for triggering the terminal device to report the measurement report of the preset measurement reporting event to the first network device, and the preset measurement reporting event is used for the first network device to instruct the terminal device to hand over from the first network device to a second network device. It may be understood that, during the initial rollout of a new network standard, operators generally adopt a relatively conservative fallback policy by setting a higher fallback threshold. In this case, when the signal strength of the first detection signal between the terminal device and the first network device is high and can meet a voice call requirement of a user, the terminal device may perform EPS FB, resulting in an increased risk of voice service establishment failure caused by EPS FB. According to the call establishment method provided in the embodiments of this application, when the signal strength of the first detection signal between the terminal device and the first network device is less than the first threshold, whether the signal strength of the first detection signal is greater than the second threshold (less than a value of the first threshold) is further determined, and the reporting of the measurement report of the preset measurement reporting event to the first network device is suppressed when the signal strength of the first detection signal is greater than the second threshold. This can avoid a situation in which the terminal device may perform EPS FB when the signal strength of the first detection signal between the terminal device and the first network device is high and can meet the voice call requirement of the user, thereby improving continuity of the voice service. In addition, only when the signal strength of the first detection signal is less than or equal to the second threshold, the measurement report of the preset measurement reporting event is reported to the first network device, so that the terminal device can perform EPS FB, thereby ensuring the continuity of the voice service when the first detection signal between the terminal device and the first network device is low.

### BRIEF DESCRIPTION OF DRAWINGS

FIG. 1 is a schematic flowchart of a UE connecting to a 5G network and an LTE network through a wireless network;
FIG. 2 is a schematic flowchart of a voice service of a terminal device falling back from VoNR to VoLTE;
FIG. 3 is a schematic diagram of a network architecture according to an embodiment of this application;
FIG. 4 is a schematic diagram of an application scenario according to an embodiment of this application;
FIG. 5 is a schematic flowchart of a call establishment method according to an embodiment of this application;
FIG. 6A is a schematic diagram of a correspondence between reporting of a measurement reporting event and an RSRP according to an embodiment of this application;
FIG. 6B is a schematic diagram of an existing correspondence between reporting of a measurement reporting event and an RSRP;
FIG. 7 is a schematic diagram of a hardware system applicable to an electronic device according to this application; and
FIG. 8 is a schematic diagram of a hardware system applicable to an electronic device according to this application.

### DESCRIPTION OF EMBODIMENTS

Technical solutions in embodiments of this application are described below with reference to the accompanying drawings in the embodiments of this application. In the descriptions of the embodiments of this application, "/" means "or" unless otherwise specified. For example, A/B may represent A or B. "And/or" used herein describes only an association relationship for describing associated objects and represents that three relationships may exist. For example, A and/or B may represent the following three cases: Only A exists, both A and B exist, and only B exists. In addition, in the descriptions of the embodiments of this application, "a plurality of' means two or more than two.

The terms "first", "second", and "third" mentioned below are used merely for the purpose of description, and shall not be construed as indicating or implying relative importance or implying a quantity of indicated technical features. Therefore, a feature defining "first", "second", or "third" may explicitly or implicitly include one or more of the features.

For ease of understanding, some concepts related to the embodiments of this application are exemplified for reference.
1. Voice over new radio (Voice over NR, VoNR).
   A voice service carried based on 5G may be referred to as VoNR.
2. Voice over long-term evolution (Voice over Long-Term Evolution, VoLTE).
   A voice service carried based on LTE may be referred to as VoLTE.
3. Measurement reporting event.

When a terminal device (User Equipment, UE) is camped on a cell, a network device generally configures different measurement reporting events and sends these measurement reporting events to the UE. The UE may measure cell signal quality based on configuration information of a measurement reporting event, and report the event to the network device when a reporting condition in the configuration information of the measurement reporting event is met. Further, the network device performs a corresponding operation based on the event reported by the UE.

Common measurement reporting events include the following events.

Event A1: The event A1 is configured to measure whether a signal strength of a currently camped-on serving cell is greater than a preset threshold A1, and the event A1 is reported to the network device when the signal strength of the currently camped-on serving cell is greater than the preset threshold A1. The network device disables the measurement of the signal strength of the corresponding cell based on the reported event A1.

Event A2: The event A2 is configured to measure whether a signal strength of a currently camped-on serving cell is less than a preset threshold A2, and the event A2 is reported to the network device when the signal strength of the currently camped-on serving cell is less than the preset threshold A2. The network device enables the measurement of the signal strength of the corresponding cell based on the reported event A2. Generally, a cell handover operation may be performed after the measurement of the signal strength of the corresponding cell is enabled.

Event A3: The event A3 is configured to measure a signal strength of a neighboring cell and a signal strength of a currently camped-on serving cell, and the event A3 is reported to the network device when the signal strength of the neighboring cell is greater than the signal strength of the currently camped-on serving cell. The network device determines, based on the reported event A3, whether the UE hands over from the currently camped-on serving cell to the neighboring cell.

Event A4: The event A4 is configured to measure whether a signal strength of a neighboring cell is greater than a preset threshold A4, and the event A4 is reported to the network device if the signal strength of the neighboring cell is greater than the preset threshold A4.

Event A5: The event A5 is configured to measure a signal strength of a serving cell and a signal strength of a neighboring cell, and the event A5 is reported to the network device if the signal strength of the serving cell is less than a preset threshold A51 and the signal strength of the neighboring cell is greater than a preset threshold A52. The preset threshold A51 may be less than the preset threshold A52. The network device determines, based on the reported event A5, whether the UE performs a cell handover.

Event A6: The event A5 is configured to measure a signal strength of a neighboring cell and a signal strength of a secondary cell, and the event A6 is reported to the network device when the signal strength of the neighboring cell is greater than the signal strength of the secondary cell. The network device determines, based on the reported event A6, whether the UE hands over to a cell with higher signal strength.

Event B1: The event B1 is configured to measure a signal strength of an inter-RAT neighbor cell, and the event B1 is reported to the network device if the signal strength of the inter-RAT neighbor cell is greater than a preset threshold B1. The network device determines, based on the reported event B1, whether the UE performs an inter-RAT handover.

Event B2: The event B1 is configured to measure a signal strength of a currently camped-on serving cell and a signal strength of an inter-RAT neighbor cell, and the event B2 is reported to the network device if the signal strength of the currently camped-on serving cell is less than a preset threshold B21 and the signal strength of the inter-RAT neighbor cell is greater than a preset threshold B22. The preset threshold B21 may be less than the preset threshold B22. The network device determines, based on the reported event B2, whether the UE hands over from the currently camped-on serving cell to the inter-RAT neighbor cell.

4. Evolved packet system fallback (evolved packet system fallback, EPS FB).

EPS FB refers to a process in which when VoNR is not available in a 5G network, a voice service falls back from 5G to 4G to ensure continuity of the voice service through VoLTE.

During the initial rollout of a next-generation network technology, generally, network signals corresponding to the next-generation network technology are often subject to instability. Therefore, operators generally adopt a fallback policy to ensure normal call operation. The fallback policy may refer to falling back, after a call over a next-generation network device encounters issues, to a previous-generation network device for the call, thereby ensuring the normal call operation.

For example, during the initial rollout of a voice service VoNR in a fifth generation mobile communication technology (Fifth Generation Mobile Communication Technology, 5G), operators lack confidence in a VoNR network and therefore adopt a relatively conservative fallback policy. For example, in a process in which a terminal device establishes a voice service through a 5G network device, an A2 measurement reporting event is reported to the 5G network device when a signal strength of a currently camped-on NR serving cell is less than a preset threshold. The 5G network device instructs, based on the reported A2 measurement reporting event, the terminal device to perform EPS FB (for example, to hand over from a 5G network to a 4G network). However, compared with establishing the voice service through VoNR, establishing the voice service through an EPS FB procedure involves more network elements and more complex interactions between the network elements. Furthermore, given that a current NR network has been relatively well-deployed, it is concluded through analysis that in the foregoing scenario (for example, a reference signal received power of a current NR serving cell is less than a preset threshold 1), in some cases (for example, the reference signal received power of the current NR serving cell is greater than a newly set threshold 2, and the threshold 2 is less than the threshold 1), establishing the voice service through the EPS FB procedure is more likely to experience a failure compared with continuing to establish the voice service through VoNR.

For example, if the preset threshold is -95 dBm, and a mobile phone measures that an RSRP between a 5G base station and the mobile phone is -96 dBm, an A2 measurement reporting condition is met, and the 5G base station initiates EPS FB after the mobile phone reports the A2 measurement reporting event to the 5G base station. It should be noted that, when the RSRP between the 5G base station and the mobile phone is -96 dBm, it is generally sufficient for a normal voice call on the mobile phone. In this case, if EPS FB is initiated, compared with establishing the voice service through VoNR, establishing the voice service through the EPS FB procedure involves more network elements and more complex interactions between the network elements, resulting in a higher probability of EPS FB failure, which may affect a normal voice call of a user. In a possible case, when the RSRP between the 5G base station (NR) and the mobile phone is -96 dBm, an RSRP between a 4G base station (LTE) and the mobile phone is -103 dBm. It can be seen that a signal strength between the NR base station and the mobile phone is greater than a signal strength between the LTE base station and the mobile phone at a current moment. In this case, if EPS FB is initiated, fallback of a voice service of the mobile phone from VoNR to VoLTE may affect the normal voice call of the user due to the weak signal strength between the LTE base station and the mobile phone.

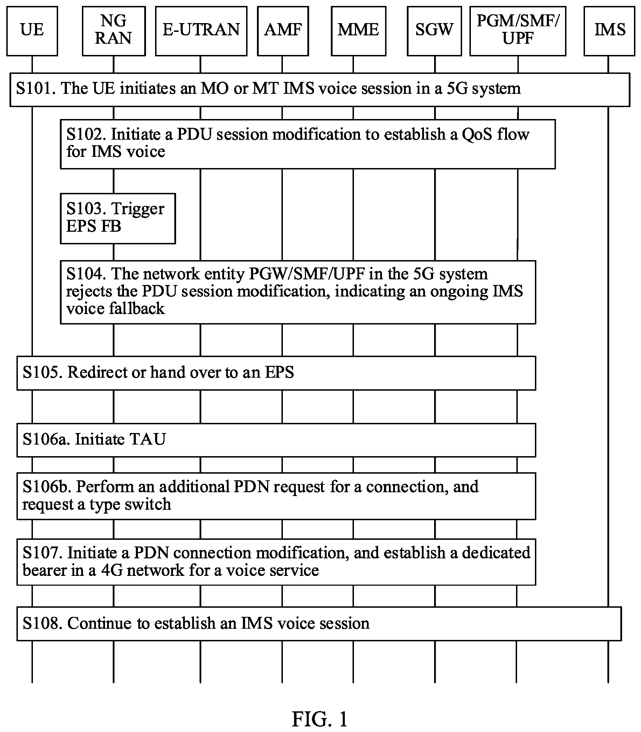

Exemplarily, as shown in FIG. 1, a UE connects to a 5G network and an LTE network through a wireless network. The wireless network includes a next generation radio access network (next generation radio access network, NG-RAN), an evolved UTRAN (E-TRAN), an access mobility management function (access mo bility managementfunction, AMF), a mobility management entity (mobility managemententity, MME), a serving gateway (serving gateway, SGW), a packet data network gateway (packet data network gateway, PGW)/session management function (sessionmanagement function, SMF)/user plane function (user plane function, UPF), or an IP multimedia subsystem (IP Multimedia Subsystem, IMS) voice session. A process in which a voice service falls back from 5G to 4G includes the following steps.

S101: The UE initiates an IMS-originated call or receives an IMS-terminated call in a 5G system.

S102: Initiate a PDU (packet data unit, packet data unit) session modification (session modification) to establish a QoS flow for IMS voice.

S103: An NG-RAN in the 5G system triggers an EPS FB process.

Optionally, the NG-RAN further triggers measurement report solicitation (solicitation) and reporting procedures.

S104: A network entity PGW/SMF/UPF in the 5G system rejects the PDU session modification, indicating an ongoing IMS voice fallback.

S105: Redirect or hand over to an EPS.

S106a: Initiate a tracking area update (tracking area update, TAU) process.

S106b: Use a packet data network (Packet Data Network, PDN) request for a connection, and request a type switch.

S107: Initiate a PDN connection modification to establish a dedicated bearer in a 4G network for the voice service.

S108: Continue to establish an IMS voice session.

During the initial rollout of a 5G technology, operators adopt an EPS FB policy to ensure normal call operation. The fallback policy may refer to falling back, after the voice service cannot be established over a 5G network device, to a 4G network device to establish the voice service.

Situations in which the voice service cannot be established over a 5G network device may include the following.
1. A terminal device does not support VoNR.
   EPS FB is directly initiated when the terminal device does not support VoNR.
2. The terminal device measures that a signal strength of a detection signal between a network device and the terminal device is less than a preset threshold.
   When the terminal device supports VoNR, if the terminal device measures that the signal strength of the detection signal between the network device and the terminal device is less than the preset threshold, EPS FB is initiated.

The detection signal between the network device and the terminal device may refer to a reference signal received power (Reference Signal Receiving Power, RSRP) or a signal-to-interference-plus-noise ratio (Signal to Interference plus Noise Ratio, SNR). RSRP may be a key parameter representing a wireless signal strength and one of physical layer measurement requirements, and may refer to an average value of signal powers received on all REs (resource elements) carrying reference signals within a given symbol. SNR refers to a ratio of a strength of a received useful signal to a signal strength of a received interference signal (a noise signal and an interference signal).

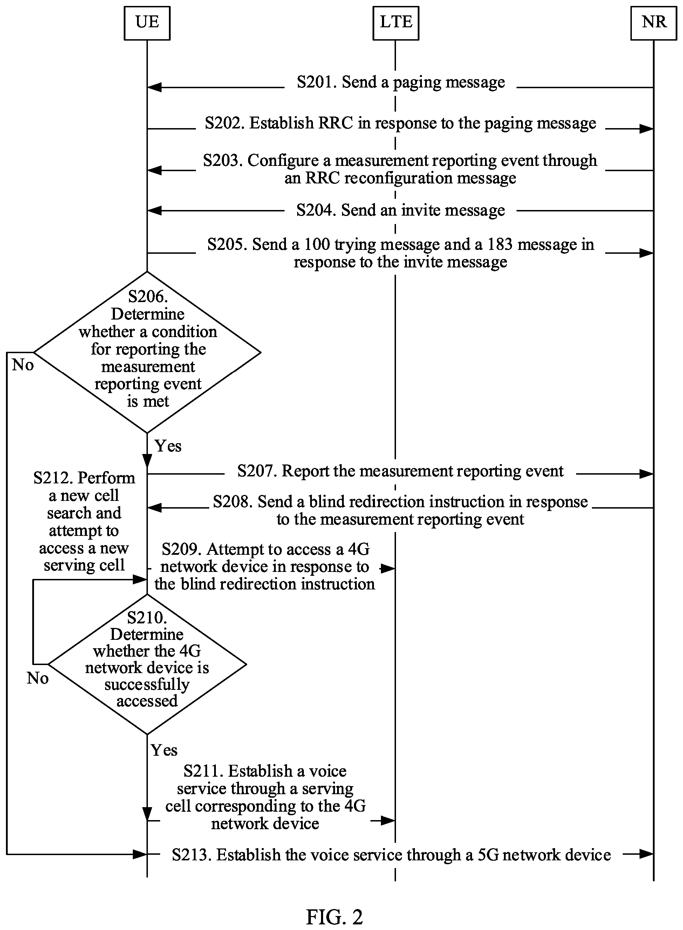

The following describes, with reference to FIG. 2, a specific process of how a voice service of a terminal device (for example, a UE) falls back from VoNR to VoLTE.

As shown in FIG. 2, the terminal device is camped on new radio (New Radio, NR), and is in an idle IDLE state.

S201: A 5G network device sends a paging (Paging) message to the UE.

It may be understood that the IDLE state may refer to a state in which the UE is disconnected from the network device but the UE remains camped on a serving cell of the network device. The network device may send the paging message to the UE, to wake up the UE to perform a corresponding operation. For example, the UE establishes a voice service connection, or the network device sends an SMS or pushes a notification to the UE.

The 5G network device may refer to NR.

S202: The UE establishes radio resource control (Radio Resource Control, RRC) in response to the paging message.

S203: The 5G network device configures a measurement reporting event for the UE through an RRC reconfiguration message after the RRC is successfully established.

The measurement reporting event may include a measurement reporting event A2, or may refer to a measurement reporting event B2. This is not limited in this embodiment of this application.

In a possible case, the 5G network device configures the measurement reporting event A2 for the UE through the RRC reconfiguration message. The measurement reporting event A2 may refer to measuring whether a signal strength of a currently camped-on serving cell is less than a preset threshold A2, and reporting the event A2 to the network device when the signal strength of the currently camped-on serving cell is less than the preset threshold A2. The network device enables the measurement of the signal strength of the corresponding cell based on the reported event A2. Generally, a cell handover operation may be performed after the measurement of the signal strength of the corresponding cell is enabled.

In a possible case, the 5G network device may alternatively configure the measurement reporting event B2 for the UE through the RRC reconfiguration message. The measurement reporting event B2 may refer to measuring a signal strength of a currently camped-on serving cell and a signal strength of an inter-RAT neighbor cell, and reporting the event B2 to the network device if the signal strength of the currently camped-on serving cell is less than a preset threshold B21 and the signal strength of the inter-RAT neighbor cell is greater than a preset threshold B22. The preset threshold B21 may be less than the preset threshold B22. The network device determines, based on the reported event B2, whether the UE hands over from the currently camped-on serving cell to the inter-RAT neighbor cell.

In this case, if the UE establishes a voice service, an invite message needs to be transmitted between the UE and the 5G network device.

If the UE initiates a voice service, that is, the UE is an originating device, the UE sends an invite message to the 5G network device. If the UE responds to a voice service initiated by the 5G network device, that is, the UE is a terminating device, the 5G network device sends an invite message to the UE.

An example in which the UE is the terminating device and the 5G network device configures the measurement reporting event A2 for the UE through the RRC reconfiguration message is used below for description.

S204: The UE receives the invite message sent by the 5G network device.

The invite is used for requesting establishment of the voice service with the UE.

S205: The UE sends a 100 trying message and a 183 message to the 5G network device in response to the invite message.

The 100 trying indicates that the UE has received the invite message and prepares to establish a call connection with the 5G network device. The 183 message is used for indicating and prompting a progress of establishing the call connection.

S206: The UE determines whether a condition for reporting the measurement reporting event is met.

Because the 5G network device has configured the measurement reporting event A2 for the UE through RRC configuration, whether a signal strength of a currently camped-on serving cell of the UE is less than the preset threshold A2 needs to be measured.

If the signal strength of the currently camped-on serving cell of the UE is less than the preset threshold A2, a condition for the measurement reporting event A2 is met, and the UE sends an A2 measurement reporting message to the 5G network device, that is, S207 is performed.

If the signal strength of the currently camped-on serving cell of the UE is greater than or equal to the preset threshold A2, a condition for the measurement reporting event A2 is not met, and the UE does not send an A2 measurement reporting message to the 5G network device and continues to establish the voice service through the 5G network device, that is, S213 is performed.

S207: The UE reports the measurement reporting event to the 5G network device.

The UE may report the measurement reporting event A2 to the 5G network device.

S208: The 5G network device sends a blind redirection instruction to the UE in response to the measurement reporting event.

The blind redirection instruction may be used for instructing the UE to establish a voice service connection with a 4G network device. It may be understood that the blind redirection instruction may include a frequency for the UE to connect to the 4G network device, for example, a frequency K.

S209: The UE attempts to access a serving cell corresponding to the 4G network device based on the blind redirection instruction.

It may be understood that the UE may search for the serving cell corresponding to the 4G network device based on the frequency K indicated by the blind redirection instruction. If a serving cell 1 corresponding to the 4G network device is found, the UE may send a msg1 to the serving cell 1 and attempt to access the serving cell 1. It should be noted that, a process in which the UE attempts to access the serving cell corresponding to the 4G network device based on the blind redirection instruction may be understood as performing EPS FB. The EPS FB may include method steps S105 to S107 shown in FIG. 1.

S210: Determine whether the UE has successfully accessed the 4G network device.

If the serving cell 1 is normal, the serving cell responds to the msg1 sent by the UE, so that the UE accesses the 4G network device and performs a voice call through the serving cell (namely, the serving cell 1) corresponding to the 4G network device. That is, S211 is performed.

If the serving cell 1 is faulty or experiences excessive environmental interference, the serving cell 1 may not respond to the message msg1 sent by the UE or to another subsequent message, causing the UE to fail to access the serving cell 1. In a possible case, if the serving cell 1 does not respond to the message msg1 sent by the UE within a duration of a first timer, the UE switches to the IDLE state. The first timer may refer to a T300 timer. It may be understood that the UE is in the IDLE state before a second timer expires, and therefore the UE performs cell reselection in the serving cell corresponding to the 4G network device.

If the UE fails to access the 4G network device, the UE continues to search for the 4G network device, that is, S212 is performed.

S211: The UE performs the voice call through the serving cell corresponding to the 4G network device.

S212: The UE redetermines a serving cell 2 and accesses the serving cell 2.

It may be understood that the UE may search for an LTE cell based on a target frequency in configuration information, and after the LTE cell (equivalent to the serving cell 2) is found, the UE may attempt to access the serving cell 2 by sending the msg1 to the serving cell 2. When sending the msg1 to the serving cell 2, the UE generally starts the T300 timer. If the serving cell 2 is faulty or experiences significant environmental interference, the serving cell 2 does not respond to the msg1 sent by the UE, causing the T300 timer to expire and the UE to enter the IDLE state. In this case, the UE stops a T3430 timer and starts a T3411 timer. Because the UE is in the IDLE state, the UE performs cell reselection. If the T3411 timer expires, a TAU procedure is re-initiated, and the LTE cell is re-accessed.

S213: The UE establishes the voice service through NR.

It may be understood that the preset threshold used by the UE in the process of determining whether the condition for the measurement reporting event A2 is met may be a threshold configured by the network device. During the initial rollout of the 5G technology, operators generally adopt a relatively conservative policy, and set a high preset threshold, which may cause the terminal device to fall back to 4G when a 5G signal is strong.

In view of this, the embodiments of this application provide a call establishment method, applied in a process of establishing a voice service between a terminal device and a first network device, and the method includes: when a signal strength of a first detection signal between the terminal device and the first network device is less than a first threshold, suppressing reporting of a measurement report of a preset measurement reporting event to the first network device if the signal strength of the first detection signal is greater than a second threshold; or
reporting a measurement report of a preset measurement reporting event to the first network device if the signal strength of the first detection signal is less than or equal to a second threshold, where the second threshold is less than the first threshold, the first threshold is a threshold for triggering the terminal device to report the measurement report of the preset measurement reporting event to the first network device, and the preset measurement reporting event is used for the first network device to instruct the terminal device to hand over from the first network device to a second network device. It may be understood that, during the initial rollout of a new network standard, operators generally adopt a relatively conservative fallback policy by setting a higher fallback threshold. In this case, when the signal strength of the first detection signal between the terminal device and the first network device is high and can meet a voice call requirement of a user, the terminal device may perform EPS FB under the instruction of the network device, resulting in an increased risk of voice service establishment failure caused by EPS FB. According to the call establishment method provided in the embodiments of this application, when the signal strength of the first detection signal between the terminal device and the first network device is less than the first threshold, whether the signal strength of the first detection signal is greater than the second threshold (less than a value of the first threshold) is further determined, and the reporting of the measurement report of the preset measurement reporting event to the first network device is suppressed when the signal strength of the first detection signal is greater than the second threshold. This can avoid a situation in which the terminal device performs EPS FB when the signal strength of the first detection signal between the terminal device and the first network device is high and can meet the voice call requirement of the user, thereby improving continuity of the voice service. In addition, only when the signal strength of the first detection signal is less than or equal to the second threshold, the measurement report of the preset measurement reporting event is reported to the first network device, so that the terminal device can perform EPS FB, thereby ensuring the continuity of the voice service when the first detection signal between the terminal device and the first network device is low.

The following describes a network architecture and an application scenario according to an embodiment of this application with reference to the accompanying drawings.

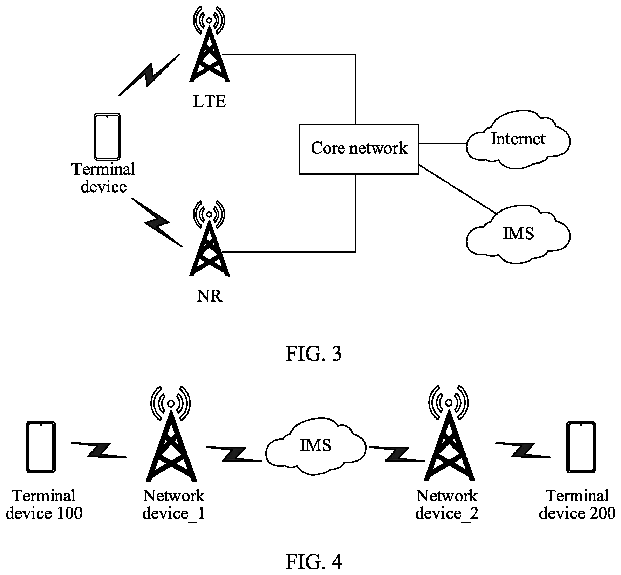

FIG. 3 is a schematic diagram of a network architecture exemplarily according to an embodiment of this application. As shown in FIG. 3, the network architecture may include a terminal device, LTE, NR, a core network, and an IMS or Internet (Internet). LTE may be understood as a radio access network of a 4G network. In an LTE network (commonly known as the 4G network), due to an evolutionary relationship, an access network part is referred to as an evolved UMTS terrestrial radio access network (Evolved UMTS Terrestrial Radio Access Network, E-UTRAN). In this application, LTE and E-UTRAN have the same meaning, and both refer to the access network part of the 4G network. The terminal device may access LTE through a 4G base station. NR may be understood as a radio access network of a 5G network. In the 5G network, an access network part is referred to as a next generation radio access network (Next Generation Radio Access Network, NG-RAN or NG RAN). In this application, NR and NG-RAN (or referred to as NG RAN) have the same meaning, and both refer to the access network part of the 5G network. It may be understood that both LTE and NR are access networks. The access network is responsible for using a wired or wireless connection and communication technology to aggregate a large number of end users (End Users) to a core network (also referred to as a backbone network) in a hierarchical manner, to establish a connection with the network. The access network is an edge part of the entire network, is a part closest to the users, and is often called the "last mile". A main function of the core network is to provide user connectivity, perform user management, and support the completion of services. The core network serves as a bearer network that provides an interface to an external network. Establishment of user connectivity includes functions such as mobility management (MM), call management (CM), switching/routing, and notification recording (in combination with an intelligent network service to complete a connection relationship to an external intelligent network device). It may be understood that a core network of a 4G network is an evolved packet core (Evolved Packet Core, EPC) network. The EPC network is a core network of a 4G mobile communication network. The EPC network falls within the scope of the core network, including conventional mobile network capabilities such as subscriber data storage, mobility management, and data exchange, and providing users with ultra-high-speed Internet access. A core network of a 5G network is 5G Core (which may be abbreviated as 5GC). The 5GC uses a general-purpose network function virtualization device to replace a dedicated communication device in the 4G network.

It should be noted that, the core network in the network architecture shown in FIG. 3 may be obtained through integration of EPC and 5GC. In other words, the core network in the network architecture may include network elements in the EPC, and may also include network elements in the 5GC. For example, the core network in the network architecture may include an access and mobility management function (Access and Mobility Management Function, AMF) network element, a mobility management entity (Mobility Management Entity, MME) network element, a serving gateway (Serving GateWay, SGW) network element, a packet data network gateway (Packet Data Network GateWay, PGW) network element, a session management function (Session Management Function, SMF) network element, a user plane function (User Plane Function, UPF) network element, a unified data management function (Unified Data Management, UDM) network element, and a home subscriber server (Home Subscriber Server, HSS) network element.

In some embodiments of this application, the core network in the network architecture may include integrated network elements obtained from the network elements in the EPC and the network elements in the 5GC, for example, SMF+PWG-C, UPF+PWG-U, or UDM+HSS. The PGW-C is a control-plane node of a PGW network element, and the PGW-U is a user-plane node of the PGW network element.

In some embodiments of this application, the core network in the network architecture shown in FIG. 3 may include a proxy session border control (Proxy Session Border Control, PSBC) network element, which is an integrated network element that integrates session border control (Session Border Control, SBC), a proxy call session control function (Proxy-CSCF, P-CSCF), an access transfer control function (Access Transfer Control Function, ATCF), and an access transfer gateway (Access Transfer Gateway, ATGW). When serving as an SBC network element, the core network connects an IMS core network/a softswitch network with an external user access domain, completing service access of an IMS user/a softswitch user, implementing interoperability of user services in different network environments, ensuring security of the IMS/softswitch networks, and supporting functions such as QoS management, CAC call admission control, media management, and media CDRs call detail records.

Each network element in the core network may also be referred to as a function entity. It may be a network element implemented on dedicated hardware, a software instance running on dedicated hardware, or a virtualized function instance on an appropriate platform.

It should be understood that names of all network elements in this application are merely examples. In future communication, such as 6G, the network elements may also be referred to as other names. Alternatively, in future communication, such as 6G, the network elements involved in this application may be replaced by other entities or devices with the same functions. This is not limited in this application. A uniform explanation is given herein and will not be repeated subsequently. Optionally, the various network elements in the embodiments of this application may be communication devices, or may be chips or chip systems that may be used in the communication devices. This is not limited in the embodiments of this application.

It may be understood that the core network in the network architecture shown in FIG. 3 may also include other devices, network elements, network entities, or network subsystems, for example, a policy control function (Policy Control function, PCF) network element. This is not limited in this application. It should be noted that, a distribution manner of the network elements in the core network is not limited in this application. For details of the distribution manner, refer to relevant technical documents, which are not elaborated herein.

IMS is a network architecture that provides voice and multimedia communication services (such as voice, video, and text messaging) based on an Internet protocol (Internet Protocol, IP) network. The IMS can implement secure and reliable multimedia communications between different devices on different networks. An architecture model provides a unified basic structure and a common mechanism for controlling, operating, routing, and managing a session, as well as for implementing authentication, authorization, and accounting control. An IMS specification includes widely used recommendations from the Internet engineering task force (The Internet Engineering Task Force, IETF), for example, a session initialization protocol (Session initialization Protocol, SIP) for session control signaling.

The Internet generally refers to a global network, also referred to as an international network, referring to a massive network of networks interconnected using a set of common protocols, thereby forming a logically unified large-scale international network. From the perspective of network communications, the Internet is a data communication network that connects computer networks of various countries, regions, and organizations worldwide using the Transmission Control Protocol (Transmission Control Protocol, TCP)/Internet Protocol (Internet Protocol, IP).

It should be noted that, the network architecture shown in FIG. 3 is not limited to including the devices and networks shown in the figure, but may also include other devices not shown in the figure. These are not individually exemplified herein.

FIG. 4 is a voice call scenario according to an embodiment of this application. As shown in FIG. 4, a terminal device 100 may transmit voice data to a terminal device 200 through a network device_1, an IMS, and a network device_2. The network device_1 is a network device corresponding to a currently camped-on cell of the terminal device 100, and the network device_2 is a network device corresponding to a currently camped-on cell of the terminal device 200. In some embodiments of this application, the network device_1 and the network device_2 may be the same network device. In some embodiments of this application, the terminal device 100 may be a party initiating a voice call to request a voice call with the terminal device 200. In some other embodiments of this application, the terminal device 200 may be a party initiating a voice call to request a voice call with the terminal device 100.

The network device in this embodiment of this application may be a device configured to communicate with the terminal device. For example, the network device may be a base station.

It should be understood that, the foregoing is an exemplary description of the application scenario, and does not constitute any limitation on the application scenario of this application.

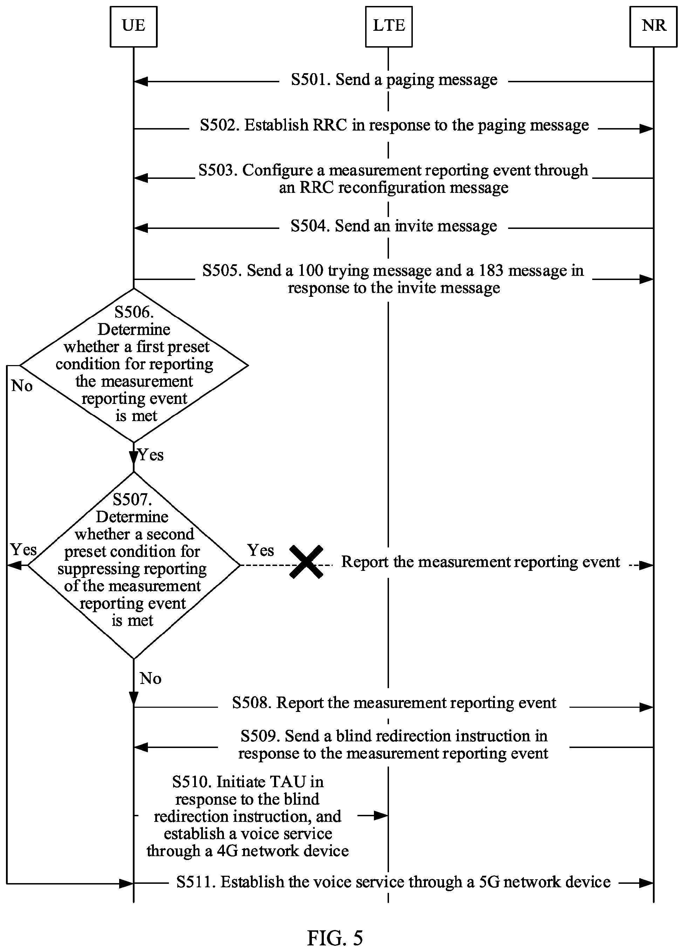

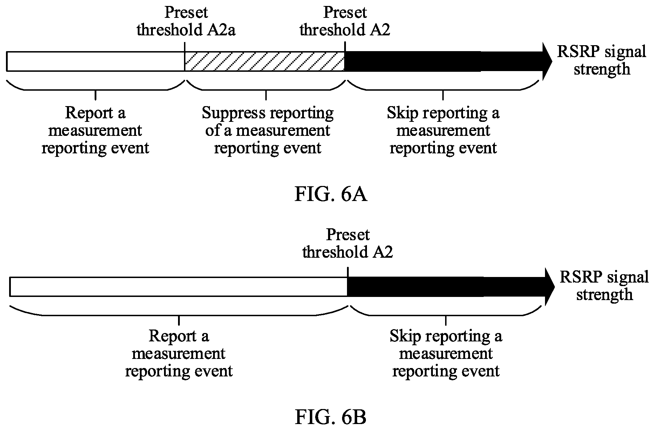

The following describes the call establishment method according to the embodiments of this application in detail with reference to FIG. 5, FIG. 6A, and FIG. 6B.

FIG. 5 is a schematic flowchart of a call establishment method according to an embodiment of this application. As shown in FIG. 5, the method includes the following steps.

S501: NR sends a paging (Paging) message to a UE.

It may be understood that an IDLE state may refer to a state in which the UE is disconnected from a base station but the UE remains camped on a serving cell of the base station. The base station may send the paging message to the UE, to wake up the UE to perform a corresponding operation. For example, the UE establishes a voice service connection, or the network device sends an SMS or pushes a notification to the UE.

It should be noted that, the call establishment method provided in the embodiments of this application,

S502: The UE establishes radio resource control (Radio Resource Control, RRC) in response to the paging message.

S503: A 5G network device configures a measurement reporting event for the UE through an RRC reconfiguration message after the RRC is successfully established.

The 5G network device can configure a measurement reporting event A2 for the UE, or can configure a measurement reporting event B2 for the UE. When the 5G network device can configure the measurement reporting event A2 or the measurement reporting event B2 to the UE, the UE may be triggered to perform a serving cell handover.

In a possible case, the 5G network device can configure the measurement reporting event A2 for the UE through the RRC reconfiguration message. The measurement reporting event A2 may refer to measuring whether a signal strength of a currently camped-on serving cell is less than a preset threshold A2, and reporting the event A2 to the network device when the signal strength of the currently camped-on serving cell is less than the preset threshold A2. The network device enables the measurement of the signal strength of the corresponding cell based on the reported event A2. Generally, a cell handover operation may be performed after the measurement of the signal strength of the corresponding cell is enabled.

In this case, if the UE establishes a voice service, an invite message needs to be transmitted between the UE and the 5G network device. If the UE initiates a voice service, that is, the UE is an originating device, the UE sends an invite message to the 5G network device. If the UE responds to a voice service initiated by the 5G network device, that is, the UE is a terminating device, the 5G network device sends an invite message to the UE.

An example in which the UE is the terminating device and the 5G network device configures the measurement reporting event A2 for the UE through the RRC reconfiguration message is used below for further description.

S504: The UE receives the invite message sent by the 5G network device.

The invite is used for requesting establishment of the voice service with the UE.

S505: The UE sends a 100 trying message and a 183 message to the 5G network device in response to the invite message.

The 100 trying indicates that the UE has received the invite message and prepares to establish a call connection with the 5G network device. The 183 message is used for indicating and prompting a progress of establishing the call connection.

S506: The UE determines whether a first preset condition for reporting a measurement reporting event is met.

Because the 5G network device has configured the measurement reporting event A2 for the UE through RRC configuration, whether a signal strength of a currently camped-on serving cell of the UE is less than the preset threshold A2 needs to be measured.

If the signal strength of the currently camped-on serving cell of the UE is less than the preset threshold A2, that is, a condition for the measurement reporting event A2 is met, whether the first preset condition for suppressing the measurement reporting event is met is determined, that is, S507 is performed.

For example, the preset threshold A2 is -95 dBm. The UE measures that an RSRP between the 5G network device and the UE is -96 dBm. In this case, the first preset condition for the measurement reporting event A2 has been met, and whether the second preset condition for suppressing the measurement reporting event is met needs to be further determined, that is, S507 is performed.

If the signal strength of the currently camped-on serving cell of the UE is greater than or equal to the preset threshold A2, that is, the condition for the measurement reporting event A2 is not met, the UE may establish the voice service directly through NR, that is, S511 is performed.

S507: The UE determines whether the second preset condition for suppressing the measurement reporting event is met.

The second preset condition for suppressing the measurement reporting event may include that:
the UE supports VoNR;
a signal strength of a detection signal of the currently camped-on serving cell of the UE is greater than a preset threshold A2a; and
a current moment is between receiving the invite message sent by NR and replying to the network device with 180 ringing.

Generally, that the UE supports the VoNR may be generally determined by the UE reading a configuration file of the UE.

Generally, the UE determines whether the preset condition for the measurement reporting event is met after sending the 100 trying message and the 183 message to the 5G network device and before sending the 180 ringing message. Therefore, the preset condition is generally met. In this case, when the UE determines support for VoNR by reading the configuration file of the UE, after the UE sends the 100 trying message and the 183 message to the 5G network device and before the UE sends the 180 ringing message, it is sufficient to determine that the preset condition for suppressing the measurement reporting event is met only by determining that the signal strength of the detection signal of the currently camped-on serving cell of the UE is greater than the preset threshold A2a.

The preset threshold A2a may refer to a threshold less than the preset threshold A2. In addition, when the signal strength of the detection signal of the currently camped-on serving cell of the UE is greater than the preset threshold A2a, a normal voice service can be met.

For example, the preset threshold A2 is -95 dBm, and the preset threshold A2a is -105 dBm.

If the UE measures that the RSRP between the 5G network device and the UE is -94 dBm, that is, the signal strength of the detection signal of the currently camped-on serving cell of the UE is greater than the preset threshold A2, reporting of the measurement reporting event A2 is not triggered. In this case, the UE does not report the measurement reporting event A2 to the 5G network device, and establishes the voice service through the 5G network device, that is, S511 is performed.

If the UE measures that the RSRP between the 5G network device and the UE is -96 dBm, that is, the signal strength of the detection signal of the currently camped-on serving cell of the UE is less than the preset threshold A2, the signal strength is a signal strength that triggers reporting of the measurement reporting event A2. However, because the RSRP between the 5G network device and the UE is greater than the preset threshold A2a, the preset condition for suppressing the measurement reporting event is met. In this case, the UE does not report the measurement reporting event A2 to the 5G network device and establishes the voice service through the 5G network device, that is, S511 is performed.

If the UE measures that the RSRP between the 5G network device and the UE is -106 dBm, that is, the signal strength of the detection signal of the currently camped-on serving cell of the UE is less than the preset threshold A2, the signal strength is a signal strength that triggers reporting of the measurement reporting event A2. Further, because the RSRP between the 5G network device and the UE is also less than the preset threshold A2a, the preset condition for suppressing the measurement reporting event is not met. In this case, the UE reports the measurement reporting event A2 to the 5G network device, that is, S508 is performed.

When the measured RSRP between the 5G network device and the UE is greater than the preset threshold A2, the UE does not report the measurement reporting event A2 to the 5G network device and establishes the voice service through the 5G network device. When the measured RSRP between the 5G network device and the UE is less than the preset threshold A2a, the UE reports the measurement reporting event A2 to the 5G network device. When the measured RSRP between the 5G network device and the UE is less than the preset threshold A2 and is greater than the preset threshold A2a, reporting of the measurement reporting event A2 to the 5G network device is suppressed, as shown in FIG. 6A.

If the current EPS FB policy is continued for establishing the voice service, when the measured RSRP between the 5G network device and the UE is greater than the preset threshold A2, the UE directly reports the measurement reporting event A2 to the 5G network device. As a result, when the RSRP between the 5G network device and the UE is less than or equal to the preset threshold A2, the UE reports the measurement reporting event A2 to the 5G network device, thereby performing EPS FB, as shown in FIG. 6B.

S508: The UE reports the measurement reporting event A2 to the 5G network device.

S509: The 5G network device sends a blind redirection instruction to the UE in response to the measurement reporting event A2.

S510: The UE initiates a TAU procedure in response to the blind redirection instruction and establishes the voice service through a 4G network device.

It may be understood that an implementation process in which the UE initiates the TAU procedure in response to the blind redirection instruction and establishes the voice service through the 4G network device may be similar to the steps shown in the foregoing S208 to S212, and is not described herein again.

It may be understood that implementing " initiating the TAU procedure in response to the blind redirection instruction and establishing the voice service through the 4G network device" through the foregoing steps shown in S208 to S212a involves a plurality of steps, which may lead to faults resulting in voice call establishment failure.

S511: The UE establishes the voice service through the 5G network device.

It should be understood that although the steps in the flowcharts of the embodiments are displayed sequentially according to instructions of arrows, these steps are not necessarily performed sequentially according to a sequence instructed by the arrows. Unless otherwise clearly specified in this specification, the steps are performed without any strict sequence limit, and may be performed in other sequences. In addition, at least some steps in the flowcharts may comprise a plurality of substeps or a plurality of stages. The substeps or the stages are not necessarily performed at the same moment, but may be performed at different moments. The substeps or the stages are not necessarily performed in sequence, but may be performed in turn or alternately with another step or at least some of substeps or stages of the another step.

It may be understood that to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or computer software driving hardware depends on particular applications and design constraints of the technical solutions. A person of skill in the art may use different methods to implement the described functions with reference to embodiments for each particular application, but it should not be considered that the implementation goes beyond the scope of this application.

In the embodiments of this application, function modules of the electronic device may be divided based on the foregoing method example. For example, each function module may be divided according to each function, or two or more functions may be integrated into one module. It should be noted that, in the embodiments of this application, the module division is an example, and is merely logical function division, and there may be other division modes during actual implementation. It should be noted that, in the embodiments of this application, names of modules are illustrative, and during actual implementation, the names of the modules are not limited.

The call establishment method provided in the embodiments of this application is applicable to the electronic device. Optionally, the electronic device includes a terminal device, which may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. The embodiments of this application impose no limitation on a specific technology and a specific device form used by the electronic device.

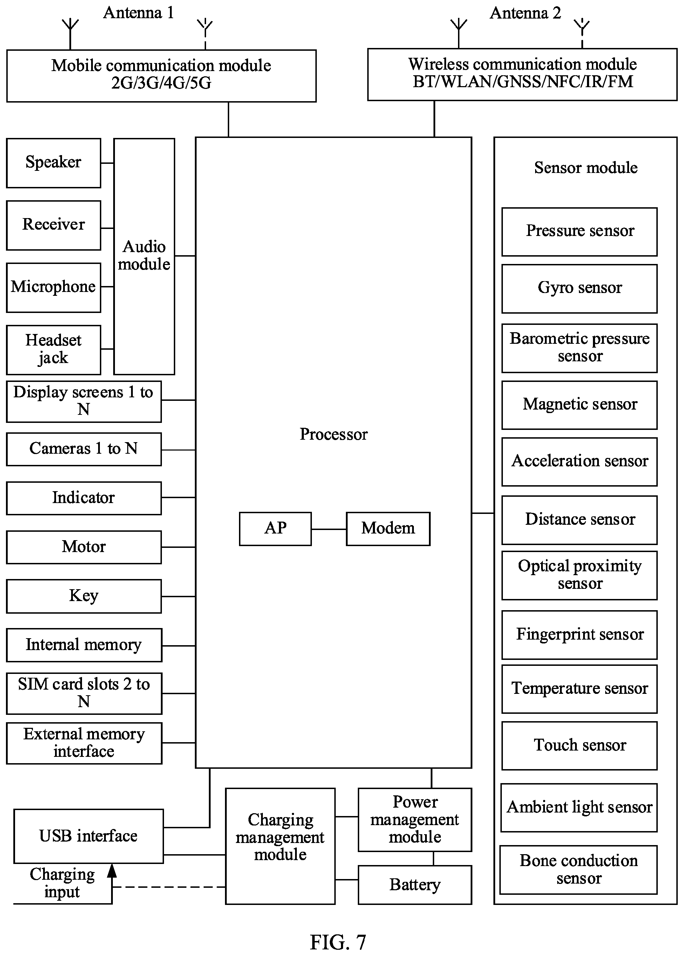

A hardware structure of the terminal device shown in FIG. 7 may include: a processor, an external memory interface, an internal memory, a universal serial bus (Universal Serial Bus, USB) interface, a charging management module, a power management module, a battery, an antenna 1, an antenna 2, a mobile communication module, a wireless communication module, a sensor module, a key, a motor, an indicator, a camera, a display screen, a SIM card slot, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that an example structure in this embodiment of this application does not constitute a specific limitation on the terminal. In some other embodiments, the terminal may include more or fewer components than those shown in the figure, or some components may be combined, or some components may be split, or components are arranged in different manners. The components shown in the figure may be implemented by hardware, software, or a combination of software and hardware.

The processor may include one or more processing units. For example, the processor may include an application processor (application processor, AP), a modem processor (Modem, which also may be referred to as a baseband processor), a graphics processing unit (Graphics Processing Unit, GPU), an image signal processor (Image Signal Processor, ISP), a controller, a video codec, a digital signal processor (Digital Signal Processor, DSP), and/or a neural-network processing unit (neural-network processing unit, NPU). Different processing units may be independent devices, or may be integrated into one or more processors. The processor is a nerve center and a command center of the terminal. The controller may generate an operating control signal according to instruction operation code and a sequence signal, to complete control of fetching and executing instructions.

A wireless communication function of the terminal may be implemented through the antenna 1, the antenna 2, the mobile communication module, the wireless communication module, the Modem, and the like. In some embodiments, the antenna 1 and the mobile communication module of the terminal are coupled, and the antenna 2 and the wireless communication module of the terminal are coupled, so that the terminal can communicate with another terminal by using a wireless communication technology and a network side device.

In addition, an operating system runs on the foregoing components, for example, an iOS operating system developed by Apple Inc, an Android open source operating system developed by Google, or a Windows operating system developed by Microsoft.

An operating system of the terminal may use a layered architecture, an event-driven architecture, a microkernel architecture, a micro service architecture, or a cloud architecture. In this embodiment of this application, an Android system of a layered architecture is used as an example to exemplarily describe software and hardware structures of the terminal. It should be noted that, although this embodiment of this application is described by using the Android system as an example, the basic principle is also applicable to a terminal based on the operating system such as iOS or Windows.

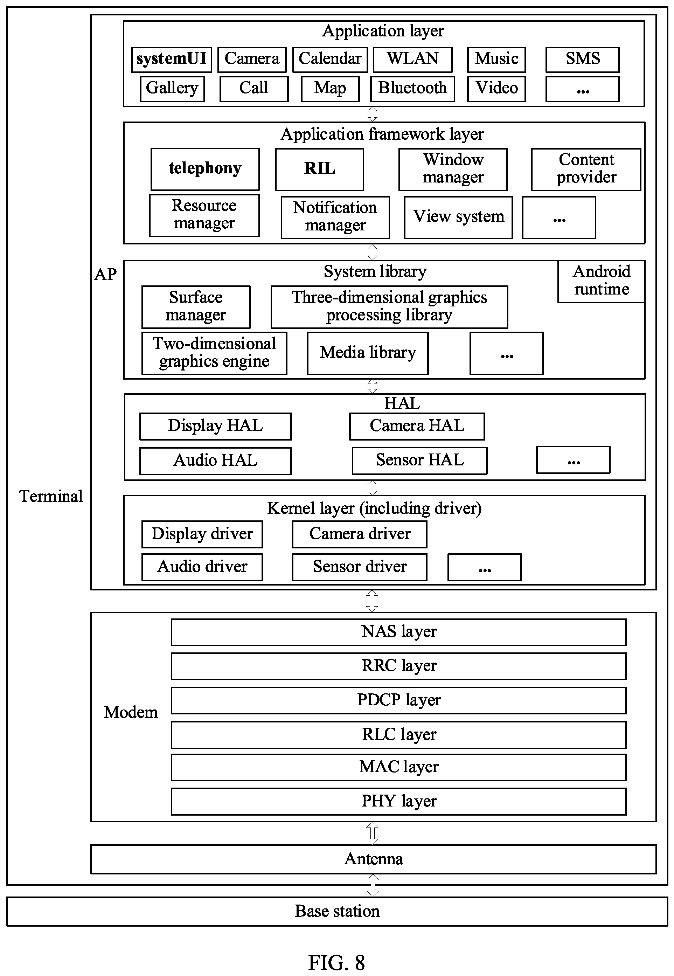

FIG. 8 is a block diagram of a software structure of a terminal. A layered architecture is used in the software structure. In the layered architecture, software is divided into several layers, and each layer has a clear role and task. The layers communicate with each other through a software interface. An example in which an Android system, the Android system runs on an AP is used. In some embodiments, the Android system is divided into five layers: an application layer, an application framework layer (Framework), an Android runtime (Android runtime) and a system library, a hardware abstraction layer (HAL), and a system kernel layer (Kernel) from top to bottom.

The application layer may include a series of application packages. The application packages may include APPs such as camera, gallery, calendar, call, map, WLAN, Bluetooth, music, video, and SMS messages. The application layer may further include a systemUI (systemUI). The systemUI is configured to display an interface of the terminal, for example, display a signal icon corresponding to a SIM card or display a call interface. The application framework layer provides an application programming interface (Application Programming Interface, API) and a programming framework for the applications at the application layer. The application framework layer includes some predefined functions. For example, the application framework layer may include a window manager, a content provider, a view system, a phone manager, a resource manager, a notification manager, and the like. The phone manager is configured to provide a call function of the terminal, such as managing call states (including answering or hanging up). The phone manager in FIG. 8 is denoted as telephony. The application framework layer may further include an RIL (Radio Interface Layer, wireless communication interface layer). A modem processor (Modem) may perform information exchange with the telephony through the RIL.

The Modem may include a NAS (Non-Access Stratum, non-access layer) layer, an RRC (radio resource control, radio resource control) layer, a packet data convergence protocol (Packet Data Convergence Protocol, PDCP) layer, a radio link layer control protocol (Radio Link Control, RLC) layer, a media access control (Medium Access Control Layer, MAC) layer, and a physical (Physical, PHY) layer. The foregoing layers may be software modules. The Modem may interact with a base station through an antenna.

In addition, some embodiments of this application provide a terminal device, including: one or more processors and a memory. The memory is configured to store computer program code, where the computer program code includes computer instructions, and when the one or more processors execute the computer instructions, the terminal performs the foregoing paging message processing method.

Some embodiments of this application provide a chip system, applied to a terminal device. The chip system includes at least one processor and an interface. The interface is configured to receive instructions and transmit the instructions to the at least one processor. The at least one processor executes the instructions to cause the terminal to perform the foregoing paging message processing method. The chip system may be a Modem or a system on chip (System on Chip, Soc) including a Modem. The foregoing method may be performed by a Modem.

In this application, "at least one" refers to one or more, and "a plurality of" refers to two or more. "At least one of the following" or a similar expression thereof refers to any combination of these items, including one item or any combination of a plurality of items. For example, at least one of a, b, or c may represent a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples of units and algorithm steps described in the embodiments disclosed in this specification, this application may be implemented by using electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

A person skilled in the art can clearly understand that for convenience and conciseness of description, the specific working processes of the above-described systems, devices and units can be understood with reference to the corresponding processes in the above-described method embodiments and will not be repeated here.

In the several embodiments provided in this application, it should be understood that the disclosed apparatus and method may be implemented in other manners. For example, the apparatus embodiment described above is merely exemplary. For example, unit division is merely logical function division and there may be other division manners during actual implementation. For example, a plurality of units or components may be combined or integrated into another system, or some features may be omitted or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate components may or may not be physically separated. The components displayed as units may or may not be physical units, and may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A call establishment method, wherein the method is applied in a process of establishing a voice service between a terminal device and a first network device, and the method comprises:
when a signal strength of a first detection signal between the terminal device and the first network device is less than a first threshold,
suppressing reporting of a measurement report of a preset measurement reporting event to the first network device if the signal strength of the first detection signal is greater than a second threshold; or
reporting a measurement report of a preset measurement reporting event to the first network device if the signal strength of the first detection signal is less than or equal to a second threshold, wherein
the second threshold is less than the first threshold, the first threshold is a threshold for triggering the terminal device to report the preset measurement reporting event to the first network device, and the preset measurement reporting event is used for the first network device to instruct the terminal device to hand over from the first network device to a second network device.

2. The method according to claim 1, wherein the suppressing reporting of a preset measurement reporting event to the first network device if the signal strength of the first detection signal is greater than a second threshold comprises:
determining, if the signal strength of the first detection signal is greater than the second threshold, whether the terminal device supports establishing the voice service through the first network device; and
suppressing the reporting of the preset measurement reporting event to the first network device if the terminal device supports establishing the voice service through the first network device.

3. The method according to claim 2, wherein the suppressing the reporting of the preset measurement reporting event to the first network device if the terminal device supports establishing the voice service through the first network device comprises:
suppressing the reporting of the preset measurement reporting event to the first network device when the terminal device supports establishing the voice service through the first network device, the current terminal device has received an invite message, and the terminal device has not sent a 180 ringing message.

4. The method according to any one of claims 1 to 3, wherein the signal strength of the first detection signal comprises a reference signal received power RSRP.

5. The method according to any one of claims 1 to 4, wherein the suppressing reporting of a preset measurement reporting event to the first network device if the signal strength of the first detection signal is greater than a second threshold comprises:
suppressing the reporting of the preset measurement reporting event to the first network device, and establishing the voice service through the first network device, if the signal strength of the first detection signal is greater than the second threshold.

6. The method according to any one of claims 1 to 5, wherein the first network device is a new radio NR device, and the second network device is a long term evolution LTE device.

7. The method according to any one of claims 1 to 6, wherein the preset measurement reporting event is an A2 measurement reporting event.

8. The method according to any one of claims 1 to 7, wherein the reporting a preset measurement reporting event to the first network device if the signal strength of the first detection signal is less than or equal to a second threshold comprises:
reporting the preset measurement reporting event to the first network device if the signal strength of the first detection signal is less than or equal to the second threshold, to cause the first network device to initiate an evolved packet system fallback EPS FB procedure based on the preset measurement reporting event.

9. An electronic device, comprising:
one or more processors;
a memory; and
one or more computer programs, wherein the one or more computer programs are stored on the memory, and the computer programs, when executed by the one or more processors, cause the electronic device to perform the method according to any one of claims 1 to 8.

10. A chip system, comprising a processor, configured to invoke and execute a computer program from a memory, to cause an electronic device equipped with the chip system to perform the method according to any one of claims 1 to 8.
